Europäisches Patentamt

European Patent Office

Office européen des brevets

(11) Numéro de publication : **0 385 858 B1**

(12) **FASCICULE DE BREVET EUROPEEN**

(45) Date de publication du fascicule du brevet :
**13.05.92 Bulletin 92/20**

(51) Int. Cl.⁵ : **F16B 19/00, F16B 13/08**

(21) Numéro de dépôt : **90400550.1**

(22) Date de dépôt : **28.02.90**

(54) Cheville d'ancrage composée de deux demi-chevilles de forme vrillée.

(30) Priorité : **01.03.89 FR 8902678**

(43) Date de publication de la demande :
**05.09.90 Bulletin 90/36**

(45) Mention de la délivrance du brevet :
**13.05.92 Bulletin 92/20**

(84) Etats contractants désignés :
**CH DE GB IT LI SE**

(56) Documents cités :
**EP-A- 0 116 161
DE-A- 1 400 825
DE-A- 2 505 878
DE-U- 8 628 212
FR-A- 2 594 027**

(73) Titulaire : **SOCIETE EUROPEENNE DE PROPULSION
24 rue Salomon de Rothschild
F-92150 Suresnes (FR)**

(72) Inventeur : **Vives, Michel F.
24, rue des Houx, Le Taillan Médoc
F-33320 Eysines (FR)**

(74) Mandataire : **Levesque, Denys et al
Cabinet Beau de Loménie 55, rue d'Amsterdam
F-75008 Paris (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

## Description

La présente invention se rapporte à une cheville d'ancrage permettant de solidariser deux pièces à travers lesquelles elle est mise en place; cette cheville est composée de deux demi-chevilles complémentaires accolées l'une contre l'autre, chacune d'elles, de conformation semblable sensiblement semi-cylindrique, étant limitée, du côté extérieur de la cheville, par une portion de surface cylindrique de révolution et, du côté intérieur de la cheville, par une surface d'accolement à l'autre demi-cheville; la conformation des demi-chevilles est telle que la cheville qu'elles composent est élastiquement compressible en direction transversale.

Une cheville de ce genre est connue par la demande de brevet français n° 2 594 027. L'une des demi-chevilles de cette cheville comporte, à son extrémité, une saillie tournée vers l'autre demi-cheville, de sorte qu'elle cause une expansion de l'extrémité correspondante de la cheville une fois que les deux demi-chevilles ont été mises en place à travers les pièces à solidariser et reçoivent de celles-ci des efforts de compression qui les font fléchir élastiquement.

Cette cheville a fait ses preuves. Elle présente toutefois certains inconvénients :

– son extrémité doit impérativement déborder des pièces à solidariser pour permettre l'écartement avec mise en flexion des demi-chevilles; cela interdit par exemple son emploi pour fixer une pièce offrant un simple trou borgne;

– les efforts de compression émanant des pièces solidarisées par la cheville sont concentrés dans d'étroites zones du pourtour de celle-ci, étant ainsi mal répartis sur sa longueur;

– l'une au moins des demi-chevilles a une forme compliquée qui conduit à un coût de fabrication élevé.

L'invention a pour but de remédier à ces inconvénients par la création d'une cheville quine nécessite aucun débordement hors des pièces à solidariser, qui conduise à une meilleure répartition des efforts et qui présente une forme simple permettant une fabrication économique.

Ce but est atteint avec une cheville du genre considéré plus haut, dans laquelle les surfaces d'accolement des deux demi-chevilles qui la composent sont des surfaces gauches de conformation légèrement vrillée longitudinalement, en sens inverse l'une de l'autre.

Cette conformation très simple donnée aux demi-chevilles composant une cheville confère à celle-ci la capacité de pouvoir se comprimer élastiquement sur toute sa longueur, ce qui autorise un bon fonctionnement de la cheville même sans débordement hors des pièces à solidariser, les efforts de compression se répartissant de façon homogène sur la longueur de traversée desdites pièces.

Plus particulièrement, la surface d'accolement de chaque demi-cheville est de préférence une surface hélicoïdale admettant le même axe que ladite portion de surface cylindrique de révolution, les surfaces hélicoïdales d'accolement des deux demi-chevilles complémentaires tournant respectivement à droite et à gauche autour dudit axe, de moins d'un quart de tour sur la longueur des demi-chevilles. Cette dernière condition assure un effet de dévrillage avec réaction élastique dans tous les cas sous les efforts de compression transversale subis par la cheville après sa mise en place à travers les pièces à solidariser.

Dans une forme de réalisation très simple, les deux demi-chevilles complémentaires sont des pièces symétriques par rapport à un plan. Autrement dit, chaque demi-cheville est l'image de l'autre dans un miroir.

La portion de surface cylindrique de révolution précitée, qui limite chaque demi-cheville du côté extérieur peut s'étendre sur toute la longueur de celle-ci. On obtient alors une cheville de forme générale sensiblement cylindrique. Les demi-chevilles peuvent aussi comporter à une extrémité un renflement formant une demi-tête d'appui, les deux demi-têtes d'appui de deux demi-chevilles complémentaires formant ensemble une tête d'appui pour la cheville qu'elles composent.

Il est possible de fabriquer les chevilles selon l'invention de façon très simple et économique, avec des chutes de matière réduites. En effet, les demi-chevilles peuvent être obtenues par tranchage longitudinal de deux barres de section circulaire suivant une ligne diamétrale progressant le long de chaque barre en tournant autour de l'axe de celle-ci, à droite pour l'une des barres, à gauche pour l'autre, puis par tronçonnage en portions successives des barres ainsi tranchées.

En cas de besoin, les barres précitées peuvent comporter des bourrelets périphériques espacés donnant naissance à une demi-tête d'appui sur chacune des demi-chevilles issues du tranchage et du tronçonnage des barres.

En pratique, le tranchage des barres peut être effectué par découpe soit au laser, soit au jet d'eau à haute pression.

Les principaux avantages offerts par la cheville selon l'invention sont les suivants :

– elle permet d'effectuer des assemblages de types variés, notamment du fait qu'elle peut être mise en place par introduction dans les pièces des demi-chevilles non seulement l'une après l'autre, mais ensemble par emmanchement en force, et ce aussi bien dans un trou traversant que dans un trou borgne;

– les demi-chevilles constitutives ont une forme simplifiée, ce qui autorise l'emploi de moyens de fabrication en série précis et rapides et réduit les rebuts de pièces pour cotes erronées;

– elle procure des assemblages de qualité parfaite, avec une excellente répartition des efforts entre pièces et cheville.

La cheville selon l'invention trouve application dans le domaine de la chirurgie osseuse, où elle est utilisable avec des prothèses bio-compatibles susceptibles d'être fixées sur l'os, ainsi que pour l'assemblage d'éléments en composites thermostructuraux en vue de la réalisation d'organes d'avions ou d'engins spatiaux (bras accroche-flamme, canaux ou volets de sortie de post-combustion, tuyères de fusées, éléments de navettes spatiales, etc).

D'autres particularités et avantages de l'invention ressortiront de la description qui va suivre, en regard des dessins annexés, d'exemples de réalisation non limitatifs.

La figure 1 représente, en perspective, une cheville d'ancrage selon la technique antérieure.

La figure 2 représente, à la manière de la figure 1, une cheville d'ancrage selon la présente invention.

La figure 3 représente en perspective, à plus petite échelle, les deux parties d'une cheville selon l'invention.

La figure 4 représente les deux parties de la figure 3 après accolement pour former une cheville.

Les figures 5 et 6 représentent la cheville de la figure 4 vue de bout, respectivement sans compression et en situation d'écrasement par une force de compression.

Les figures 7a à 7h représentent divers types d'assemblages réalisables à l'aide d'une cheville selon l'invention, en coupe par un plan passant par l'axe de la cheville.

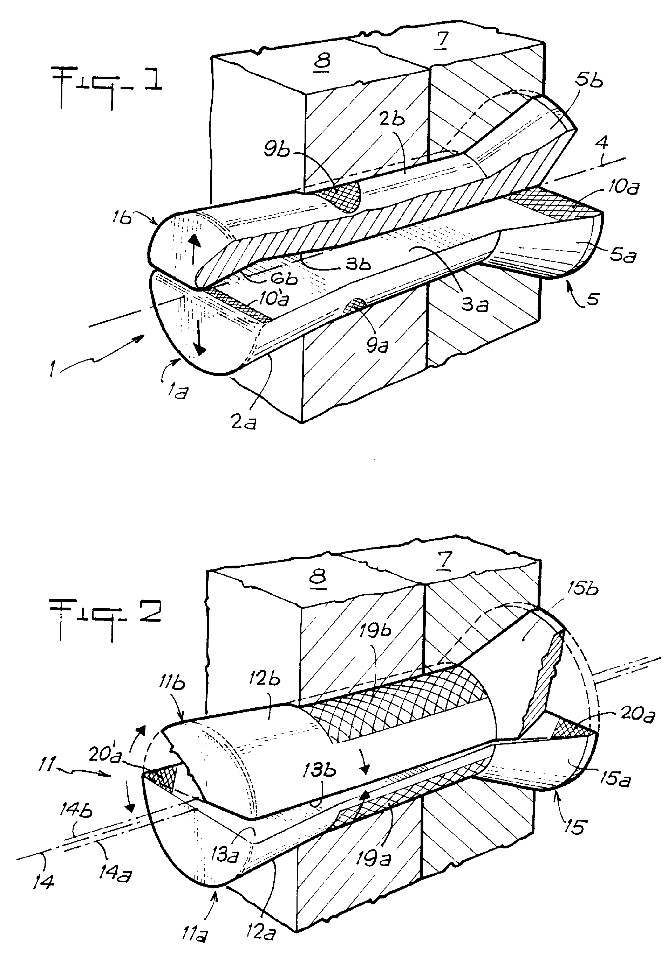

La cheville 1 représentée à la figure 1 se compose de deux demi-chevilles 1a, 1b accolées, chacune présentant une surface extérieure arrondie 2a, 2b de forme sensiblement semi-cylindrique et une surface d'accolement 3a, 3b s'étendant au voisinage d'un plan longitudinal de séparation des deux demi-chevilles 1a, 1b, passant par l'axe 4 de la cheville. Les demi-chevilles se terminent à une extrémité par des demi-têtes d'appui 5a, 5b qui forment ensemble une tête d'appui 5 sensiblement tronconique pour la cheville 1. La surface d'accolement 3b de la demi-cheville 1b n'est pas parfaitement plane : elle offre, près de son extrémité opposée à la demi-tête d'appui 5b, une rampe de blocage 6b causant un épaississement progressif de la demi-cheville à cette extrémité. Pour réunir deux plaques 7, 8 à l'aide d'une telle cheville, on perce dans celle-ci des trous en regard de diamètre égal ou légèrement supérieur à celui de la cheville formée des deux demi-chevilles accolées, diamètre mesuré dans la partie voisine de sa tête d'appui 5. On introduit alors la première demi-cheville 1b, puis la seconde demi-cheville 1a en la forçant à avancer jusqu'à juxtaposition des deux demi-têtes d'appui 5a, 5b. Les extrémités libres des deux demi-chevilles, qui débordent des plaques 7, 8 à réunir, s'écartent l'une de l'autre en fléchissant élastiquement, en raison de la présence de la rampe de blocage 6b, ce qui empêche le retrait de la cheville 1. Dans cette situation, les forces de compression des deux demi-chevilles 1a, 1b l'une contre l'autre s'exercent en des zones indiquées par des hachures croisées, savoir une paire de zones 9a, 9b sur la surface extérieure arrondie des demi-chevilles, au voisinage de leur partie débordante, et deux paires de zones 10a, 10b, 10'a, 10'b respectivement dans la région des demi-têtes d'appui 5a, 5b et à l'autre extrémité des demi-chevilles, au droit de la partie terminale de la rampe de blocage 6b de la demi-cheville 1b. Les zones d'appui 9a, 9b, par où passent les efforts engendrés par l'écartement mutuel des extrémités débordantes des deux demi-chevilles introduites à travers les plaques 7, 8, ont une étendue assez réduite.

La figure 2 montre une cheville selon la présente invention. Cette cheville 11, de structure générale similaire à celle de la cheville 1 décrite plus haut, se compose également de deux demi-chevilles 11a, 11b accolées, offrant chacune une surface extérieure arrondie 12a, 12b de forme sensiblement semi-cylindrique, une surface d'accolement 13a, 13b s'étendant au voisinage d'un plan longitudinal de séparation passant par l'axe 14 de la cheville, et une demi-tête d'appui 15a, 15b. Ici encore, les extrémités débordantes des deux demi-chevilles, une fois introduites à travers les deux plaques 7, 8 à réunir, s'écartent l'une de l'autre, empêchant ainsi le retrait de la cheville composite 11.

Toutefois, cet effet d'écartement n'est plus ici obtenu grâce à la présence d'une rampe de blocage sur la surface d'accolement de l'une des demi-chevilles, mais grâce à la forme spéciale donnée aux surfaces d'accolement 13a, 13b des demi-chevilles 11a, 11b. Ces surfaces sont des surfaces hélicoïdales se vrillant l'une à droite, l'autre à gauche autour des axes respectifs 14a, 14b des demi-chevilles, qui coïncident respectivement avec ceux de leurs surfaces semi-cylindriques 12a, 12b et sont situés de part et d'autre de l'axe 14 de la cheville 1. L'effort de compression que les demi-chevilles reçoivent des plaques 7, 8 dans les trous alignés desquels elles sont engagées tendent à les dévriller, celles-ci étant en contact mutuel dans des zones 20a, b et 20'a, b situées à leurs extrémités et de part et d'autre de l'axe 14, tandis que ledit effort de compression se répartit sur des zones 19a, b beaucoup plus longues, donc plus étendues, que les zones 9a, b de la cheville 1 de la figure 1, ce qui procure une meilleure répartition des efforts entre les plaques 7, 8 et la cheville 11.

La figure 3 montre clairement la conformation vrillée des surfaces d'accolement 13a, 13b des demi-chevilles 11a, 11b. Chacune est une surface hélicoïdale admettant le même axe 14a, 14b que la surface extérieure semi-cylindrique 12a, 12b correspondante, et tournant autour de son axe sur la longueur de la cheville à droite pour l'une des demi-chevilles, à gauche pour l'autre, d'un angle $\alpha$ qui, pour que l'effet de dévrillage élastique s'opère correctement lors de l'accolement des deux demi-chevilles, doit être inférieur à 90° et, de préférence, ne pas dépasser 45°, de façon que l'angle $\beta$ que font les surfaces d'accolement 13a, 13b à l'une ou l'autre des extrémités des demi-chevilles 11a, 11b réunies (figure 4) soit dans tous les cas inférieur à 180°. On remarquera que les demi-chevilles offrent partout, en dehors de leurs demi-têtes d'appui, une section transversale identique en forme de demi-disque.

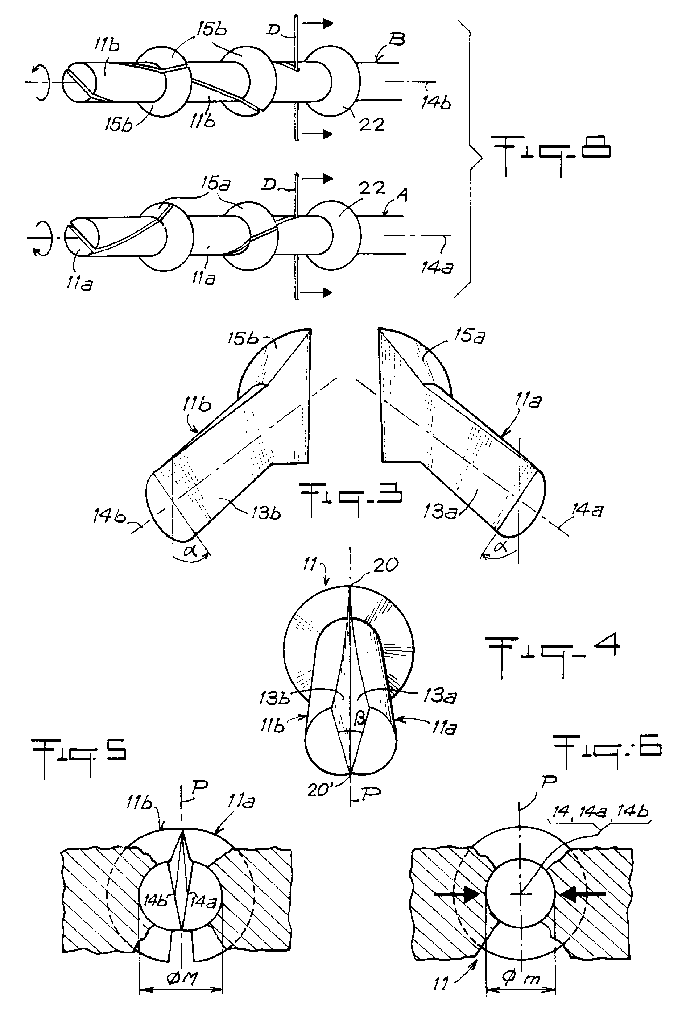

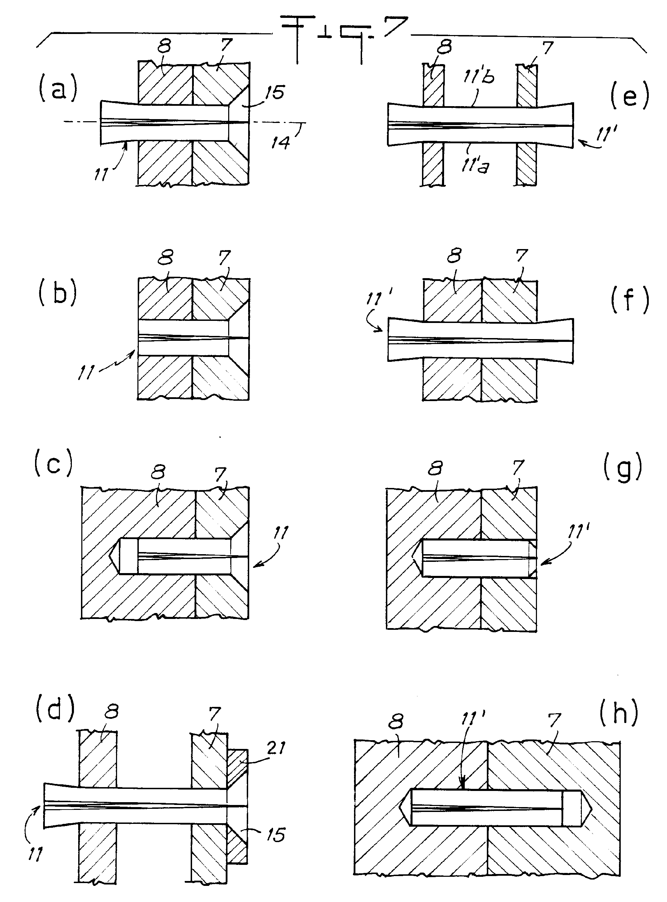

Les deux demi-chevilles de la figure 3, accolées selon la figure 4, sont symétriques par rapport au plan P passant par l'axe de la cheville 11 ainsi formée et par les points de contact des extrémités des demi-chevilles, qui correspondent aux zones 20, 20' précitées (figure 2). Le diamètre maximal de la cheville 1, sans qu'aucun effort de compression ne lui soit appliqué, a une certaine valeur $\varnothing_M$ (figure 5) qui dépend du diamètre de chacune des demi-chevilles et de l'angle de vrillage $\alpha$ des surfaces d'accolement de celles-ci. Si l'on soumet la cheville 11 à un effort de compression suffisant, tendant à rapprocher les deux demi-chevilles de part et d'autre du plan de symétrie P, celles-ci s'écrasent en se dévrillant élastiquement, leurs surfaces d'accolement se redressant pour finir par devenir planes et confondues avec le plan P (figure 6), les trois axes 4, 4a et 4b précités coïncidant alors. Dans cette situation, le diamètre de la cheville 11 se réduit à une valeur minimale $\varnothing_m$ (égale au diamètre de chaque demi-cheville) qui est inférieure à sa valeur $\varnothing_M$ en l'absence de compression. C'est une valeur comprise entre ces valeurs $\varnothing_m$ et $\varnothing_M$ que l'on donnera au diamètre des trous percés en alignement dans deux plaques 7, 8 pour recevoir une cheville 11 destinée à en assurer la solidarisation.

Les figures 7a à 7h montrent différents exemples d'utilisation d'une cheville telle que décrite ci-dessus.

Dans l'exemple de la figure 7a, la cheville 11, dotée d'une tête d'appui 15, est utilisée pour réunir l'une contre l'autre deux plaques 7, 8. La plaque 7 est creusée d'une cuvette de réception de la tête 15 , tandis que la longueur donnée à la cheville est telle qu'elle déborde de la plaque 8. Cet exemple correspond à la configuration représentée à la figure 2.

Les exemples des figures 7b et 7c sont semblables à celui de la figure 7a, à cette différence près que la longueur de la cheville 11 est égale (figure 7b) ou inférieure (figure 7c) à l'épaisseur totale des plaques 7, 8. Dans ce dernier cas, c'est un trou borgne qui est réalisé dans la plaque 8 pour recevoir la cheville 11.

Dans le cas des figures 7d et 7e, les deux plaques 7, 8 à réunir ne sont plus juxtaposées, mais espacées. Tandis que la cheville 11 de la figure 7d est munie d'une tête 15, reçue dans la cuvette d'une rondelle 21 d'appui sur la plaque 7, la cheville 11' de la figure 7e, formée de demi-chevilles 11'a, 11'b entièrement semi-cylindriques, est dépourvue de tête d'appui, la liaison offrant une configuration parfaitement symétrique.

Une même configuration symétrique se retrouve dans l'exemple de la figure 7f, qui diffère de celui de la figure 7e seulement par le fait que les deux plaques 7, 8 sont juxtaposées l'une contre l'autre.

L'exemple de la figure 7g correspond à celui de la figure 7c, avec une cheville 11' sans tête d'appui. Quant à l'exemple de la figure 7h, c'est celui de la figure 7g où la cheville 11' serait entièrement noyée dans des trous borgnes percés respectivement dans l'une et l'autre des plaques 7, 8. Dans ces deux derniers exemples, la cheville joue le rôle d'un pion de positionnement sur lequel la plaque 7 est engagée en force après sa mise en place dans le trou borgne de la plaque 8.

Il est à remarquer que, parmi les exemples précédents, seuls ceux des figures 7a et 7d seraient réalisables avec une cheville de l'art antérieur conforme à la figure 1, qui doit nécessairement déborder des plaques assemblées, et ce d'un seul côté, et ne peut s'accomoder d'un trou borgne. Si la nouvelle cheville, selon la figure 2, permet de réaliser les autres exemples, cela tient au fait qu'elle présente une faculté de compression élastique radiale en tout point de sa longueur.

Pour bloquer définitivement un assemblage réalisé avec une cheville 11 ou 11', on peut recourir à un collage avec remplissage de la fente qui subsiste entre les deux demi-chevilles.

Lorsque la cheville est utilisée dans le domaine de la chirurgie des os, le collage résulte de la colonisation osseuse qui recouvre en quelques jours la surface de la cheville, réalisée en composite carbone-carbone.

Dans le domaine des assemblages de pièces en composites thermostructuraux (C/C, C/SiC, SiC/SiC, etc), le collage est obtenu par carbonisation d'une résine à fort taux de coke ou par dépôt en phase vapeur de carbone ou de carbure de silicium.

Une fois collée, la cheville ne peut être retirée que par perçage.

La figure 8 montre comment peuvent être fabriquées les demi-chevilles 11a, 11b munies d'une demi-tête d'appui 15a, 15b. On procède, sur des barres A, B usinées aux formes et cotes de chevilles alignées bout à bout, à un découpage au laser ou au jet d'eau sous pression suivant une ligne diamétrale D très fine (de l'ordre de 0,1 à 0,5 mm de diamètre), que l'on fait progresser régulièrement sur l'axe 14a, 14b de chacune des barres, lesquelles sont animées d'un mouvement de rotation uniforme autour de leur axe, l'une dans un sens, l'autre dans le sens opposé. Chaque barre est ainsi scindée en deux moitiés séparées par une fente hélicoïdale. Le pas des surfaces hélicoïdales de découpe des barres, à droite pour la barre B et à gauche pour la barre A, est identique pour les deux barres. Après tronçonnage de chacune des barres à la longueur des chevilles désirées, il suffit d'accoupler deux demi-chevilles 11a et 11b issues respectivement des barres A et B pour obtenir une cheville complète. Dans le cas présent, les barres étant dotées de renflements 22 dont l'espacement correspond à la longueur des chevilles, les demi-chevilles obtenues sont pourvues d'une demi-tête d'appui 15a, 15b.

Le pas de découpe des barres A, B, qui détermine le pas de vrillage des surfaces hélicoïdales d'accolement 13a, 13b et, par suite, les propriétés de compression élastique des chevilles, est choisi en fonction de plusieurs paramètres, et notamment :
– des caractéristiques mécaniques en torsion du matériau constitutif des chevilles,
– des propriétés de déformation élastique du matériau constitutif des pièces à assembler,
– des tolérances réalisables sur le diamètre des barres et sur celui des trous de réception des chevilles,
– de la largeur de la fente de découpe hélicoïdale des barres, et
– des caractéristiques du type d'assemblage (avec ou sans débordement, en trou traversant ou borgne, avec ou sans tête d'appui, etc).

## Revendications

1. Cheville d'ancrage permettant de solidariser deux pièces à travers lesquelles elle est mise en place, composée de deux demi-chevilles complémentaires accolées l'une contre l'autre, chacune d'elles, de conformation semblable sensiblement semi-cylindrique, étant limitée, du côté extérieur de la cheville, par une portion de surface cylindrique de révolution et, du côté intérieur de la cheville, par une surface d'accolement à l'autre demi-cheville, la conformation des demi-chevilles étant telle que la cheville qu'elles composent est élastiquement compressible en direction transversale,
caractérisée par le fait que les surfaces d'accolement (13a, 13b) des deux demi-chevilles (11a, 11b) composant une cheville (11) sont des surfaces gauches de conformation légèrement vrillée longitudinalement, en sens inverse l'une de l'autre.

2. Cheville selon la revendication 1, caractérisée par le fait que la surface d'accolement (13a, 13b) de chaque demi-cheville (11a, 11b) est une surface hélicoïdale admettant le même axe (14a, 14b) que ladite portion de surface cylindrique de révolution (12a, 12b), les surfaces hélicoïdales d'accolement des deux demi-chevilles complémentaires tournant respectivement à droite et à gauche autour dudit axe, de moins d'un quart de tour sur la longueur des demi-chevilles.

3. Cheville selon la revendication 1 ou 2, caractérisée par le fait que les deux demi-chevilles complémentaires (11a, 11b) sont des pièces symétriques par rapport à un plan (P).

4. Cheville selon l'une quelconque des revendications 1 à 3, caractérisée par le fait que ladite portion de surface cylindrique de révolution (12a, 12b) limite chaque demi-cheville (11'a, 11'b) sur toute sa longueur.

5. Cheville selon l'une quelconque des revendications 1 à 3, caractérisée par le fait que les demi-chevilles (11a, 11b) comportent à une extrémité un renflement formant une demi-tête d'appui (15a, 15b), les deux demi-têtes d'appui de deux demi-chevilles complémentaires formant ensemble une tête (15) d'appui pour la cheville (11) qu'elles composent.

6. Cheville selon l'une quelconque des revendications 1 à 5, caractérisée par le fait que les demi-chevilles (11, 11b, 11'a, 11'b) résultent du tranchage longitudinal de deux barres (A, B) de section circulaire suivant une ligne diamétrale progressant le long de chaque barre en tournant autour de l'axe (14a, 14b) de celle-ci, à droite pour l'une des barres, à gauche pour l'autre, puis du tronçonnage en portions successives des barres ainsi tranchées.

7. Cheville selon les revendications 5 et 6, caractérisée par le fait que les barres (A, B) comportent des bourrelets périphériques (22) espacés donnant naissance à une demi-tête d'appui (15a, 15b) sur chacune des demi-chevilles (11a, 11b) issues du tranchage et du tronçonnage des barres.

8. Cheville selon la revendication 6 ou 7, caractérisée par le fait que le tranchage des barres (A, B) est effectué par découpe au laser.

9. Cheville selon la revendication 6 ou 7, caractérisée par le fait que le tranchage des barres (A, B) est effectué par découpe au jet d'eau à haute pression.

## Patentansprüche

1. Ankerdübel, der ermöglicht, dass zwei Teile verbunden werden, durch die hindurch er gesetzt wird, gebildet aus zwei komplementären Halbdübeln, die zusammengefügt sind, wobei jeder von der Ausbildung von im wesentlichen halbzylindrischer Form auf der Aussenseite des Dübels durch einen drehzylindrischen Oberflächenbereich und auf der Innenseite des Dübels durch eine Fugenoberfläche zum anderen Halbdübel begrenzt wird, wobei die Ausbildung der Halbdübel derart ist, dass der von ihnen gebildete Dübel in Querrichtung elastisch zusammendrückbar ist,
**dadurch gekennzeichnet**, dass die Fugenoberflächen (13a, 13b) der beiden Halbdübel (11a, 11b), die einen Dübel (11) bilden, windschiefe Gestaltungsoberflächen sind, die in Längsrichtung leicht gewunden in umgekehrter Richtung zueinander ausgebildet sind.

2. Dübel nach Anspruch 1, **dadurch gekennzeichnet**, dass die Fugenoberfläche (13a, 13b) eines jeden Halbdübels (11a, 11b) eine Schrauboberfläche ist, die dieselbe Achse (14a, 14b) wie der drehzylindrische Oberflächenbereich (12a, 12b) annimmt, wobei die schraubenförmigen Fugenoberflächen der beiden komplementären Halbdübel sich entsprechend nach rechts bzw. nach links um die genannte Achse um weniger als eine Vierteldrehung über die Länge der Halbdübel drehen.

3. Dübel nach Anspruch 1 oder 2, **dadurch gekennzeichnet**, dass die beiden komplementären Halbdübel (11a, 11b) symmetrische Teile bezüglich einer Ebene (P) sind.

4. Dübel nach einem der Ansprüche 1 bis 3, **dadurch gekennzeichnet,** dass der drehzylindrische Oberflächenbereich (12a, 12b) einen jeden Halbdübel (11'a, 11'b) über seine gesamte Länge begrenzt.

5. Dübel nach einem der Ansprüche 1 bis 3, **dadurch gekennzeichnet,** dass an einem Ende die Halbdübel (11a, 11b) eine Verdickung aufweisen, die einen Anschlaghalbkopf (15a, 15b) bildet, wobei die beiden Anschlaghalbköpfe der beiden komplementären Halbdübel zusammen einen Anschlagkopf (15) für den Dübel (11), den sie bilden, bilden.

6. Dübel nach einem der Ansprüche 1 bis 5, **dadurch gekennzeichnet**, dass die Halbdübel (11, 11b, 11'a, 11'b) aus einem Längsschnitt von zwei Balken (A, B) von kreissförmigem Querschnitt gemäss einer diametralen Linie, die entlang eines jeden Balkens fortschreitet unter Drehen um die Achse (14a, 14b) von diesem, nach rechts für einen der Balken, nach links für den anderen, sodann aus einem Abschneiden in aufeinanderfolgende Bereiche der so unterteilten Balken, herrühren.

7. Dübel nach den Ansprüchen 5 und 6, **dadurch gekennzeichnet**, dass die Balken (A, B) beabstandete Umfangswulste (22) aufweisen, die einen Anschlaghalbkopf (15a, 15b) auf einem jeden Halbdübel (11a, 11b) bilden, der vom Längsschneiden und Abschneiden der Balken herrührt.

8. Dübel nach Anspruch 6 oder 7, **dadurch gekennzeichnet**, dass der Längsschnitt der Balken (A, B) durch Laserschnitt erzeugt wird.

9. Dübel nach Anspruch 6 oder 7, **dadurch gekennzeichnet**, dass der Längsschnitt der Balken (A, B) durch Schnitt mittels Hochdruckwasserstrahl erzeugt wird.

## Claims

1. Anchoring dowel for joining two bodies by insertion therebetween, comprising two complementary half-dowels in mutual contact, each said half-dowel having a similar substantially semi-cylindrical configuration and being delimited at an outer face of said dowel by a portion of a cylindrical surface of revolution and, at an inner face of said dowel, by a contacting surface for the other half-dowel, the configuration of said half-dowels being such that said dowel formed thereby is elastically compressible in a transversal direction,
characterized by the fact that the contacting surfaces (13a, 13b) of the two half-dowels (11a, 11b) forming a dowel (11) are warped surfaces formed with a slight longitudinal twist in mutually opposite directions,

2. Dowel according to claim 1, characterized by the fact that the contacting surface (13a, 13b) of each half-dowel (11a, 11b) is a helical surface sharing a common axis (14a, 14b) with said portion of a cylindrical surface of revolution (12a, 12b), the said helical contacting surfaces of the two complementary half-dowels turning respectively towards the right and left around said axis through less than one quarter-turn along the length of the half dowels.

3. Dowel according to claim 1 or 2, characterized by the fact that the two complementary half-dowels (11a, 11b) are symmetric elements with respect to a plane (P).

4. Dowel according to any one of claims 1 to 3, characterized by the fact that said portion of a cylindrical surface of revolution (12a, 12b) delimits each half-dowel (11'a, 11'b) throughout the length thereof.

5. Dowel acccording to any one of claims 1 to 3, characterized by the fact that each half-dowel (11a, 11b) has a bulge at one end thereof, forming a bearing half-head (15a, 15b), the two bearing half-heads of two complementary half-dowels together forming a bearing head (15) for the dowel (11) formed thereby.

6. Dowel according to any one of claims 1 to 5, characterized by the fact that the half-dowels (11a, 11b, 11'a, 11b) are produced by slicing two bars (A, B) having a circular cross-section longitudinally along a diametrical line thereof, said line progressing along each bar and rotating around the axis (14a, 14b) thereof, towards the right for one of said bars, and towards the left for the other said bar, followed by cutting the thus-sliced said bars into successive portions.

7. Dowel according to claims 5 and 6, characterized by the fact that the bars (A, B) comprise spaced apart peripheral bulges (22) giving rise to a bearing half-head (15a, 15b) on each of said half-dowels (11a, 11b) produced by slicing and cutting said bars.

8. Dowel according to claim 6 or 7, characterized by the fact that slicing of said bars (A, B) is achieved by laser cutting.

9. Dowel according to claim 6 or 7, characterized by the fact that the slicing of said bars (A, B) is achieved by high-pressure water jet cutting.

Fig-1

Fig-2

Fig.8

Fig.3

Fig-4

Fig.5

Fig.6

Fig. 7